Europäisches Patentamt

European Patent Office

Office européen des brevets

(19)

(11) Numéro de publication : **0 336 792 B1**

## (12) FASCICULE DE BREVET EUROPEEN

(45) Date de publication du fascicule du brevet :
**15.01.92 Bulletin 92/03**

(21) Numéro de dépôt : **89400628.7**

(22) Date de dépôt : **06.03.89**

(51) Int. Cl.$^5$ : **B29C 49/42,** B29C 49/06

(54) Poinçon pour injection-soufflage d'un flacon à col incliné.

(30) Priorité : **15.03.88 FR 8803320**

(43) Date de publication de la demande :
**11.10.89 Bulletin 89/41**

(45) Mention de la délivrance du brevet :
**15.01.92 Bulletin 92/03**

(84) Etats contractants désignés :
**DE IT**

(56) Documents cités :
**FR-A- 2 446 163**
**US-A- 3 508 295**
**US-A- 3 608 017**
**US-A- 4 019 849**

(56) Documents cités :
**JAPANESE PATENT GAZETTE, semaine X32,**
**15 septembre 1976, classe A, page 8, résumé**
**no. 60676x/32, Derwent Publications Ltd, Lon-**
**dres GB; & JP-A-51 073 068 (JAPAN STEEL**
**WKS K.K.) 24-06-1976**

(73) Titulaire : **KERPLAS SNC**
**B.P. 3 Offranville**
**F-76201 Dieppe Cédex (FR)**

(72) Inventeur : **Belmont, Pierre**
**10 rue Verdier Monetti**
**F-76880 Arques la Bataille (FR)**

(74) Mandataire : **Moncheny, Michel et al**
**c/o Cabinet Lavoix 2 Place d'Estienne d'Orves**
**F-75441 Paris Cedex 09 (FR)**

## Description

L'invention concerne un poinçon pour la réalisation d'un flacon à col incliné par la technique d'injection-soufflage.

Les flacons en matière plastique d'une seule pièce comportant un col incliné par exemple de 20° par rapport à l'axe du flacon sont habituellement réalisés par la technique d'extrusion-soufflage.

Cette technique ne garantit pas un très bon état de surface à l'intérieur du col, ce qui peut conduire à des difficultés pour adapter par exemple un embout d'étalement à l'intérieur du col ou un bec verseur. De plus, les variations de cotes dans la partie supérieure du flacon, qui sont inhérentes à cette technique, limitent la cadence d'assemblage d'un tel embout. Enfin, dans le cas où l'embout doit être protégé par un capot, celui-ci, qui doit être positionné sur la base du col, n'absorbe pas toujours les différences de cotes dues à la technique d'extrusion-soufflage.

Dans une technique de mise en oeuvre des matières plastiques telle que l'injection-soufflage, on utilise des poinçons cylindriques ne permettant pas de réaliser des flacons dont le col est incliné de plus de quelques degrés par rapport à l'axe du flacon.

Les machines utilisées pour l'injection-soufflage sont équipées de trois postes.

Au premier poste appelé poste d'injection, un poinçon ayant la forme d'un cylindre creux est entouré par un moule dont les parois sont parallèles et peu distantes de celles du poinçon. On y injecte sous pression de la matière plastique dans l'espace existant entre le poinçon et le moule. Cette opération étant réalisée, on ouvre le moule et on transfère le poinçon et la matière plastique l'enrobant vers le poste de soufflage.

Au poste de soufflage, le poinçon et son enrobement sont insérés dans un moule dont les parois ont la forme du flacon désiré et sont écartées de la matière enrobant le poinçon. Par soufflage d'air sous pression, à l'aide de la canalisation prévue à l'intérieur du poinçon et d'une soupape alimentant des orifices, on applique avec force la matière plastique sur les parois du moule. On forme ainsi le flacon. On ouvre ensuite le moule et le poinçon, entouré par le flacon, est transféré au poste d'éjection.

Au poste d'éjection, on sépare le flacon du poinçon qui se trouve ainsi prêt pour une autre opération. Pour ceci, on fait coulisser le col du flacon le long du poinçon cylindrique. De ce fait, le col ne peut être incliné que de quelques degrés par rapport à l'axe du poinçon qui correspond à la verticale lorsque le fond du flacon est posé sur un plan horizontal.

Pour remédier aux inconvénients du procédé par extrusion-soufflage, la présente invention a pour but de fournir un poinçon permettant de réaliser par injection-soufflage un flacon comportant un col incliné d'environ 20° par rapport à la verticale.

A cet effet, l'invention a pour objet un poinçon pour la réalisation d'un flacon en matière plastique par injection-soufflage, ce flacon ayant un col incliné par rapport à l'axe du corps du flacon, le poinçon comportant une première partie de montage sur une machine à injecter-souffler prolongée par une deuxième partie destinée à être positionnée à l'intérieur d'une cavité d'un moule et comportant un premier tronçon qui, en position, est en contact avec une première partie de paroi de la cavité du moule et un deuxième tronçon prolongeant le premier tronçon et destiné à être entouré avec jeu, en position, par une deuxième partie de paroi, les première et deuxième parties du poinçon étant traversées par un canal axial de soufflage rectiligne dont une extrémité de raccordement débouche sur une face d'extrémité de la première partie de montage et une extrémité de soufflage débouche à l'extrémité libre du poinçon, caractérisé en ce que ledit premier tronçon comporte un étage cylindrique incliné par rapport à l'axe du canal et en ce que ledit deuxième tronçon comporte une partie cylindrique inclinée coaxiale audit étage cylindrique incliné, une partie cylindrique axiale d'extrémité coaxiale avec le canal et une zone de raccordement reliant ladite partie cylindrique inclinée à ladite partie cylindrique axiale.

Selon d'autres caractéristiques :

— l'étage cylindrique incliné forme avec l'axe du canal un angle sensiblement égal à l'angle du col du flacon par rapport à l'axe du flacon ;

— l'étage cylindrique incliné possède un diamètre extérieur sensiblement égal au diamètre extérieur du col du flacon et ladite partie cylindrique inclinée possède un diamètre extérieur correspondant sensiblement au diamètre intérieur du col ;

— ledit angle d'inclinaison est compris entre 3 et 30°.

L'invention a également pour objet un procédé d'injection-soufflage d'un flacon ayant un col incliné par rapport à l'axe du corps du flacon consistant à utiliser un poinçon selon l'invention.

L'invention va être décrite plus en détail ci-après en se référant aux dessins annexés sur lesquels :

— la Figure 1 est une vue en coupe axiale d'un poinçon selon l'invention ;

— la Figure 2 est une vue de la collerette de fixation du poinçon dans la machine, en coupe selon la ligne 2.2 de la Fig 1.

— la Figure 3 est une vue, partiellement en coupe axiale d'un poinçon en position dans un moule d'injection ;

— la Figure 4 est une vue partiellement en coupe axiale d'un poinçon revêtu de matière plastique par injection en position dans un moule de soufflage.

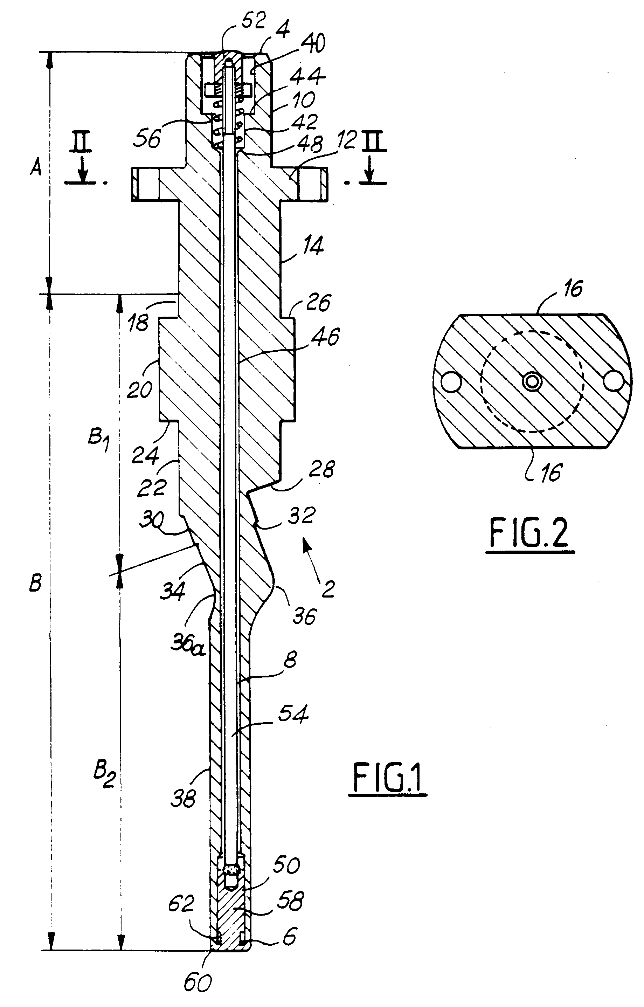

Sur la Figure 1, on a représenté en coupe axiale un poinçon 2 selon l'invention. Ce poinçon 2 possède une forme générale cylindrique étagée s'étendant entre une face 4 d'extrémité de montage et une face 6 d'extrémité libre du poinçon.

Un canal axial 8 traverse le poinçon 2 et ses deux extrémités débouchent respectivement dans les faces 4 et 6.

A partir de la face 4 d'extrémité de montage s'étend une première partie de poinçon A qui comprend à partir de cette face 4 une première partie cylindrique 10, une collerette 12 et une deuxième partie cylindrique 14.

Cette première partie de poinçon A est destinée à assurer le montage du poinçon sur une machine à injecter-souffler non représentée.

La collerette 12 représentée en coupe sur la Figure 2 comporte deux alésages pour recevoir des vis de fixation du poinçon sur la machine et deux méplats 16 pour assurer le positionnement angulaire du poinçon 2 par rapport à la machine.

Une deuxième partie de poinçon B prolonge axialement la première partie de poinçon A et s'étend jusqu'à la face 6 d'extrémité libre.

Cette deuxième partie de poinçon B comporte un premier tronçon B1 prolongeant la première partie de poinçon A, lui-même prolongé par un deuxième tronçon B2 s'étendant jusqu'à l'extrémité libre.

Le premier tronçon B1 comporte une première portion cylindrique 18 coaxiale et de même diamètre que la deuxième partie cylindrique 14 de la première partie de poinçon A, une deuxième portion 20 coaxiale de diamètre supérieur à la première portion et une troisième portion coaxiale 22 de même diamètre que la première portion 18. On a ainsi réalisé deux épaulements 24 et 26 destinés à coopérer avec des butées prévues dans les moules pour positionner axialement le poinçon 2.

La troisième portion 22 possède une paroi d'extrémité 28 plane inclinée dans cet exemple de 20° par rapport à un plan perpendiculaire à l'axe général. Cet angle correspond à l'angle voulu du col du flacon par rapport à l'axe de celui-ci.

A partir de cette paroi d'extrémité 28, le premier tronçon B1 se termine par un étage cylindrique incliné 30 s'étendant perpendiculairement à la paroi d'extrémité 28 et excentré par rapport à cette paroi. L'étage cylindrique 30 possède un diamètre égal au diamètre extérieur du col du flacon.

Il faut noter que le diamètre de la troisième portion 22 est supérieur à celui de l'étage 30 d'une quantité telle que la trace de la paroi extérieure de l'étage 30 sur la paroi d'extrémité 28 est entièrement comprise dans la trace de la paroi extérieure de la troisième portion 22 sur cette même paroi 28.

Compte tenu de l'inclinaison de la paroi 28, l'étage 30 est incliné d'un angle de 20° par rapport à l'axe du poinçon.

Le premier tronçon B1 se termine par un épaulement annulaire 32 parallèle à la paroi d'extrémité 28 du troisième étage.

A partir de cet épaulement 32 s'étend le deuxième tronçon B2 qui comporte une partie cylindrique inclinée 34 prolongeant l'étage incliné 30 dont le diamètre extérieur correspond sensiblement au diamètre intérieur du col du flacon et qui est coaxiale à l'étage 30.

Cette partie cylindrique inclinée 34 est prolongée par une zone de raccordement 36 avec une partie cylindrique axiale 38 s'étendant jusqu'à la face 6 de l'extrémité libre du poinçon.

La zone de raccordement possède une épaisseur de paroi variable dont le minimun apparaît en 36A sur la Figure 1. Ce minimum doit être suffisant pour résister à la pression de l'air qui sera insufflé dans le canal axial 8.

Le canal axial 8 est destiné à recevoir un dispositif de commande de soufflage pour permettre le soufflage d'air sous pression à travers la face 6. Il comporte une première portion cylindrique 40 adjacente à l'extrémité de raccordement, celle-ci étant prolongée en direction de la face 6 par une deuxième portion cylindrique 42 de diamètre plus petit, formant ainsi un épaulement 44.

Cette deuxième portion 42 est prolongée par un alésage 46 de diamètre inférieur à celui de la deuxième portion 42, un chanfrein 48 assurant la jonction entre l'alésage 46 et la deuxième portion 42.

A proximité de la face 6, l'alésage 46 est prolongé par une troisième portion 50 de diamètre plus grand que l'alésage 46 et débouchant dans la face 6.

Le dispositif de commande de soufflage logé dans le canal 8 comporte une tête 52 logée dans la première portion 40 du canal 8, ladite tête étant munie d'une collerette destinée à venir en butée sur l'épaulement 44.

Cette tête 52 est prolongée par une tige 54 cylindrique s'étendant dans la deuxième portion 42 du canal 8, l'alésage 46 et une partie de la troisième portion 50.

Entre le chanfrein 48 et la tête 52, un ressort hélicoïdal de compression 56 entoure la tige 54 et sollicite la tête 52 vers l'extérieur du canal 8.

L'extrémité de la tige 54 située dans la troisième portion 50 du canal 8 est munie d'une soupape 58 adaptée pour pouvoir coulisser dans la troisième portion 50 du canal 8, et pourvue d'une collerette 60 prenant appui sur la face 6 qui constitue ainsi le siège de la soupape.

Des passages non représentés mettent en communication le canal 8 et une rainure annulaire 62 prévue dans la soupape 58 de manière adjacente à la collerette 60.

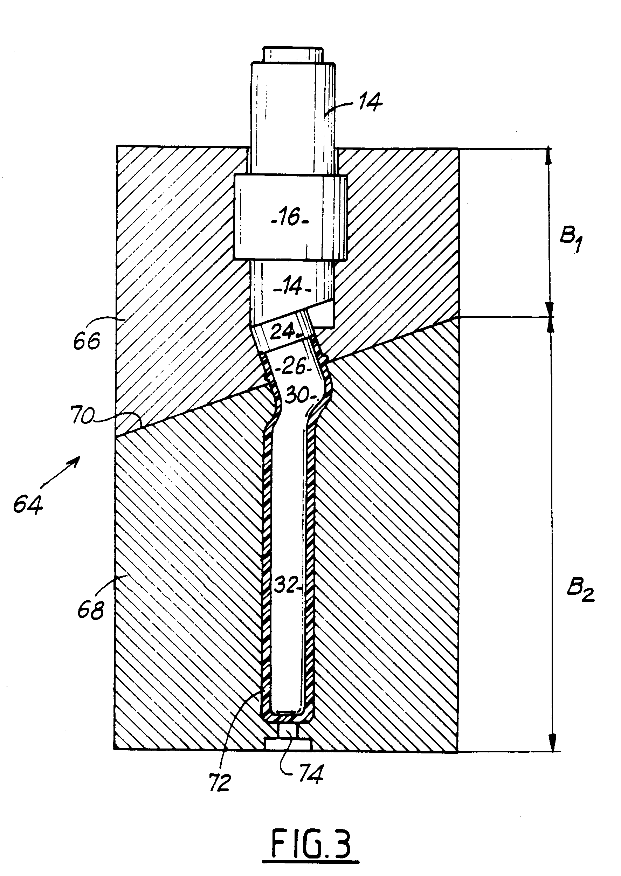

Lorsque le poinçon est amené au poste d'injection tel que représenté sur la Figure 3, il est entouré par un moule d'injection 64 en deux moitiés séparées selon un plan axial (le plan de la feuille à la Fig 3). Seules deux parties 66 et 68 du moule sont représentées.

Les parties 66 et 68 sont appliquées l'une contre l'autre, de manière étanche à l'air sous pression, selon un plan incliné 70 perpendiculaire à l'axe de l'étage cylindrique 30 et de la partie cylindrique inclinée 34. Ce plan passe à peu près par le milieu de cette partie cylindrique inclinée 34.

Lorsque les quatre parties du moule sont assemblées, elles définissent une cavité destinée à recevoir le poinçon 2.

Une partie de paroi de cette cavité est en contact étanche à l'air sous pression, avec serrage avec le premier tronçon B1 de la deuxième partie de poinçon B.

Par contre, la paroi de la cavité est légèrement distante des parois du deuxième tronçon B2, le jeu correspondant sensiblement à l'épaisseur désirée du flacon.

L'espace étanche 72 ainsi délimité entoure le deuxième tronçon B2 et est destiné à recevoir sous pression la matière plastique qui constituera ultérieurement le flacon.

Par ailleurs, il est prévu à la partie inférieure 62 du moule un trou d'injection 74 débouchant dans l'espace 72 à proximité de la face 6.

Lorsque le moule d'injection a été installé autour du poinçon, on injecte sous pression à travers le trou 74 de la matière plastique qui remplit alors l'espace 72.

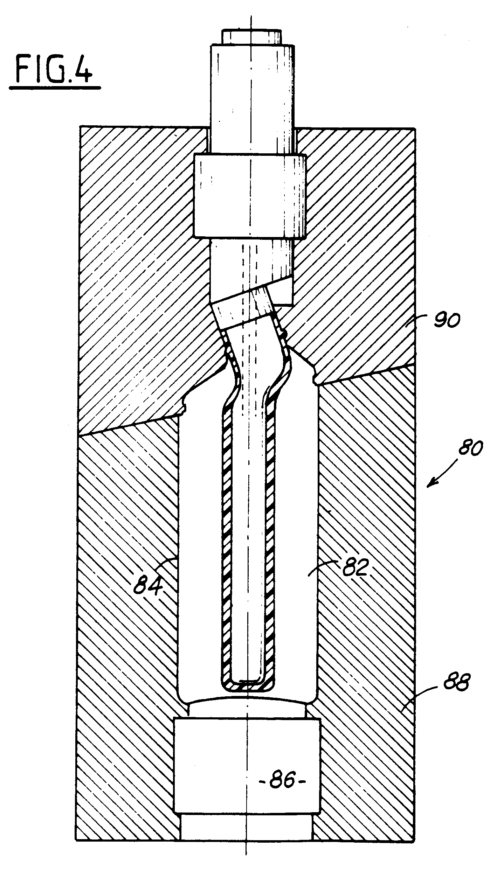

Le moule est ensuite ouvert et l'on amène le poinçon enrobé de matière plastique à un poste de soufflage où on l'entoure d'un moule de soufflage comme représenté sur la Figure 4.

Ce moule de soufflage 80 est d'une conception semblable à celle du moule d'injection 64. Cependant, sa cavité 82 possède une paroi 84 ayant la forme désirée pour la face extérieure du flacon.

La partie inférieure 86 vu sur la Figure 4 est plus importante que la partie inférieure du moule 64. Cette partie inférieure 86 comporte des moyens de refroidissement non représentés.

On notera également, dans cet exemple, que le plan incliné de séparation des parties inférieure 88 et supérieure 90 du moule est situé au niveau de la jonction du corps du flacon et de son col.

Dans cette position, on insuffle de l'air à l'aide du dispositif de commande représenté sur la Figure 1 et logé dans le canal 8 du poinçon 2. A cet effet, un dispositif de la machine (non représenté) pousse mécaniquement vers le bas sur la tête 48 à l'encontre du ressort 56.

La collerette 60 de la soupape 58 s'éloigne de la paroi d'extrémité de soufflage 6 du poinçon 2, libérant ainsi un passage pour l'air sous pression provenant de la machine et passant à travers le canal axial 8.

L'air sous pression s'insinue entre le poinçon et son enrobement de matière plastique et va plaquer cette dernière sur la paroi 84 du moule 80.

Après refroidissement et durcissement de la matière plastique, on procède au démoulage et le poinçon muni du flacon est amené à un poste d'éjection.

A ce poste, on exerce une traction sur ce flacon de manière à dégager le col du poinçon par coulissement.

Ceci est possible dans un premier temps en exerçant cette traction selon une direction parallèle à l'axe de la partie cylindrique inclinée 34.

Dans un deuxième temps, l'élasticité de la paroi du col du flacon lui permet, par une traction parallèle à l'axe du poinçon, de coulisser le long de la zone de raccordement 36, puis de la partie cylindrique axiale 38.

On a ainsi réalisé un poinçon permettant de produire un flacon ayant un col fortement incliné par rapport à la verticale à l'aide d'une machine d'injection-soufflage. Le flacon réalisé possède un bon état de surface à l'intérieur du col et des cotes précises dans sa partie supérieure.

**Revendications**

1. Poinçon (2) pour la réalisation d'un flacon en matière plastique par injection-soufflage, ce flacon ayant un col incliné par rapport à l'axe du corps du flacon, le poinçon comportant une première partie (A) de montage sur une machine à injecter-souffler prolongée par une deuxième partie (B) destinée à être positionnée à l'intérieur d'une cavité d'un moule et comportant un premier tronçon ($B_1$) qui, en position, est en contact avec une première partie de paroi de la cavité du moule et un deuxième tronçon ($B_2$) prolongeant le premier tronçon et destiné à être entouré avec jeu, en position, par une deuxième partie de paroi, les première (A) et deuxième (B) parties du poinçon étant traversées par un canal (8) axial de soufflage rectiligne dont une extrémité de raccordement débouche sur une face (4) d'extrémité de la première partie (A) de montage et une extrémité (6) de soufflage débouche à l'extrémité libre du poinçon, caractérisé en ce que ledit premier tronçon ($B_1$) comporte un étage (30) cylindrique incliné par rapport à l'axe du canal (8) et en ce que ledit deuxième tronçon ($B_2$) comporte une partie cylindrique inclinée (34) coaxiale audit étage cylindrique incliné (30), une partie cylindrique axiale (38) d'extrémité coaxiale avec le canal et une zone de raccordement (36) reliant ladite partie cylindrique inclinée (34) à ladite partie cylindrique axiale (38).

2. Poinçon selon la revendication 1, caractérisé en ce que l'étage cylindrique incliné (30) forme avec l'axe du canal (8) un angle sensiblement égal à l'angle du col du flacon par rapport à l'axe du flacon.

3. Poinçon selon la revendication 2, caractérisé en ce que l'étage cylindrique incliné (30) possède un diamètre extérieur sensiblement égal au diamètre extérieur du col du flacon et ladite partie cylindrique inclinée (34) possède un diamètre extérieur correspondant sensiblement au diamètre intérieur du col.

4. Poinçon selon la revendication 2, caractérisé en ce que ledit angle d'inclinaison est compris entre 3 et 30°.

5. Procédé de réalisation d'un flacon en une seule pièce en matière plastique dont le col est incliné par rapport à l'axe du lacon caractérisé en ce qu'il met en oeuvre la technique d'injection-soufflage et utilise un poinçon selon l'une quelconque des revendications précédentes.

## Claims

1. A mandrel (2) for the construction of a bottle made of plastic material by injection-blow moulding, this bottle having a neck inclined in relation to the axis of the body of the bottle, the mandrel comprising a first part (A) for mounting on an injection-blow moulding machine, which first part is prolongated by a second part (B) intended to be positioned inside a cavity of a mould and comprising a first section (B₁) which, when in position, is in contact with a first wall part of the cavity of the mould and a second section (B₂) prolongating the first section and intended to be surrounded with play, when in position, by a second wall part, the first (A) and second (B) parts of the mandrel being traversed by an axial channel (8) for rectilinear blowing, a connecting end of which opens onto an end face (4) of the first mounting part (A) and a blowing end (6) of which opens at the free end of the mandrel, characterised in that the said first section (B₁) comprises a cylindrical stage (30) inclined in relation to the axis of the channel (8) and in that the said second section (B₂) comprises an inclined cylindrical part (34) which is coaxial to the said inclined cylindrical stage (30), an axial cylindrical end part (38) which is coaxial with the channel and a connection zone (36) linking the said inclined cylindrical part (34) to the said axial cylindrical part (38).

2. A mandrel according to Claim 1, characterised in that, with the axis of the channel (8), the inclined cylindrical stage (30) forms an angle which is substantially equal to the angle of the neck of the bottle in relation to the axis of the bottle.

3. A mandrel according to Claim 2, characterised in that the inclined cylindrical stage (30) has an outside diameter which is substantially equal to the outside diameter of the neck of the bottle and the said inclined cylindrical part (34) has an outside diameter corresponding substantially to the inside diameter of the neck.

4. A mandrel according to Claim 2, characterised in that the said angle of inclination is between 3 and 30°.

5. A method of constructing a bottle in a single piece from plastic material, whose neck is inclined in relation to the axis of the bottle, characterised in that it makes use of the injection-blow moulding technique and uses a mandrel according to any one of the preceding claims.

## Patentansprüche

1. Dorn (2) zur Herstellung einer Flasche aus Kunststoff mit einem bezüglich der Achse des Flaschenkörpers geneigten Hals durch Spritzblasen, wobei der Dorn einen ersten Teil (A) zur Montage an einer Spritzblasmaschine besitzt, der durch einen zweiten Teil (B) verlängert ist, der dazu bestimmt ist, im Inneren eines Hohlraums einer Form positioniert zu werden und einen ersten Abschnitt (B₁), der in Stellung mit einem ersten Wandteil des Hohlraums der Form in Berührung ist, und einen zweiten Abschnitt (B₂) besitzt, der an den ersten Abschnitt anschließt und dazu bestimmt ist, in Stellung von einem zweiten Wandteil mit einem Spiel umgeben zu werden, wobei der erste Teil (A) und der zweite Teil (B) des Dorns von einem axialen geradlinigen Blaskanal (8) durchsetzt sind, von dem ein Anschlußende an einer Endfläche (4) des ersten Montageteils (A) ausmündet und ein Blasende (6) am freien Ende des Dorns ausmündet, dadurch gekennzeichnet, daß der erste Abschnitt (B₁) eine bezüglich der Achse des Kanals (8) geneigte zylindrische Stufe (30) besitzt und daß der zweite Abschnitt (B₂) einen geneigten zylindrischen Teil (34), der zur geneigten zylindrischen Stufe (30) koaxial ist, einen zu dem Kanal koaxialen axialen zylindrischen Endteil (38) und eine Verbindungszone (36) besitzt, die den geneigten zylindrischen Teil (34) mit dem axialen zylindrischen Teil (38) verbindet.

2. Dorn nach Anspruch 1, dadurch gekennzeichnet, daß die geneigte zylindrische Stufe (30) mit der Achse des Kanals (8) einen Winkel bildet, der im wesentlichen gleich dem Winkel des Flaschenhalses bezüglich der Achse der Flasche ist.

3. Dorn nach Anspruch 2, dadurch gekennzeichnet, daß die geneigte zylindrische Stufe (30) einen Außendurchmesser besitzt, der im wesentlichen gleich dem Außendurchmesser des Flaschenhalses ist, und daß der geneigte zylindrische Teil (34) einen Außendurchmesser besitzt, der im wesentlichen dem Innendurchmesser des Halses entspricht.

4. Dorn nach Anspruch 2, dadurch gekennzeichnet, daß der Neigungswinkel 3 bis 30° beträgt.

5. Verfahren zur Herstellung einer Flasche aus einem einzigen Stück aus Kunststoff, deren Hals bezüglich der Achse der Flasche geneigt ist, dadurch gekennzeichnet, daß die Spritzblastechnik eingesetzt wird und ein Dorn nach einem der vorhergehenden Ansprüche verwendet wird.

**EP 0 336 792 B1**

FIG.1

FIG.2

$B_1$

$B_2$

FIG.3

FIG.4